# EUROPEAN PATENT SPECIFICATION

(11) **EP 0 636 399 B1**
(45) Date of publication and mention of the grant of the patent: **18.11.1998**
(21) Application number: 94303886.9
(22) Date of filing: 27.05.1994
(51) Int. Cl.: B01D 53/04

(54) **A vessel baffle arrangement**
Behälter mit Leitplattenanordnung
Conteneur avec assemblage de chicanes

(30) Priority: 29.07.1993 GB 9315645
(43) Date of publication of application: 01.02.1995
(73) Proprietor: The BOC Group plc, Windlesham Surrey GU20 6HJ (GB)
(72) Inventor: Lacava, Alberto Ignacio, South Plainfield, New Jersey 07080 (GB); Doong, Shain-Jer, Berkeley Heights, New Jersey 07922 (GB); Garrett, Michael Ernest, Woking, Surrey (GB)
(74) Representative: Wickham, Michael

(56) References cited:
- EP-A- 0 468 665
- EP-A- 0 534 657
- GB-A- 2 091 121
- US-A- 4 026 680
- US-A- 5 160 513

## Description

The present invention relates to a vessel baffle arrangement and relates particularly, but not exclusively, to such an arrangement in adsorption vessels such as those used in oxygen pressure swing adsorption (PSA) plants.

The adsorption vessels in a PSA plant hold granular sieve material through which air is passed during the process. The sieve material acts to trap nitrogen present in the air and thus allows an oxygen rich gas stream to be produced.

Whilst PSA plants are designed to avoid velocities within the bed of adsorbent material which would cause fluidisation, there is often a space or plenum chamber left between the top of the bed of sieve and the vessel containing it into which sieve is often dislocated. Transverse and radial gas velocities within the chamber can often move sieve in a "sand dune" effect which, when repeated during each cycle of operation will cause attrition of the sieve material to occur, thereby decreasing the performance of the PSA plant. Significant levels of attrition can occur within hours or days of the plant being commissioned.

Presently known methods of tackling the above mentioned problem include, for example, covering the surface of the sieve material with a grid, as in GB-A-2091121, or adding a layer of mesh and covering this with larger particles which are less susceptible to windage. This, and other methods however have the problem of reducing the plenum chamber volume which can be important in some processes. In addition, if the headspace is reduced then it can often be difficult or impossible to enter the vessel when internal inspection is necessary.

EP-A-0468665 discloses a gas treatment apparatus in which a grid retains the upper surface of the particulate material and in which a number of elongate distensible hollow members extend into the said upper surface to restrain movement of the particulate material.

US-A-5160513 discloses a downflow reactor comprising a particle bed and baskets for debris removal which sit on the surface, and extend into, the particle bed.

It is an object of the present invention to provide a vessel for containing particulate material such as sieve with a baffle which reduces and possibly overcomes the above mentioned problems.

Accordingly, the present invention provides a vessel for containing a bed of particulate material in which a headspace is provided between the top of the bed and the upper vessel wall, the vessel comprising a baffle for reducing surface movement of the particulate material and which is positioned at the surface of any particulate material within the vessel, characterised in that, the baffle comprises a plurality of concentric vertical first wall portions which extend above and into said particulate material, thereby to provide a barrier to horizontal surface movement of said particulate material, the arrangement being such that there is substantially no obstruction to the passage of particulate material between the surface of the bed of particulate material and the headspace

It will be appreciated that the first wall portions will effectively act as vertical barriers thereby significantly reducing horizontal movement of sieve material.

Advantageously, the vertical first wall portions comprise a plurality of rings, each having a depth (d) and a wall thickness (w) and in which said depth (d) is greater than said wall thickness (w).

For convenience, the first wall portions may comprise right circular rings which are concentrically positioned thereby to provide a substantially symmetrical sieve distribution.

Advantageously, the vertical first wall portions are connected to the vessel by a plurality of support members.

A removable section may be provided, thereby to facilitate easier man access. The removable section may comprise one or more rings which in operation are removably suspended from said vertical first wall portions which also have the form of rings and which may be adapted for concentric suspension within said vertical first wall portions.

The present invention will now be more particularly described by way of example only with reference to the accompanying drawings in which:
Figure 1 is a side elevation of a typical PSA vessel incorporating the present invention;
Figure 2 is a cross sectional view of the upper portion of the vessel shown in Figure 1;
Figure 3 is a view in the direction of arrow A in Figure 2; and
Figure 4 is an enlarged plan view of an inner baffle for attachment to the baffle shown in Figures 2 and 3.

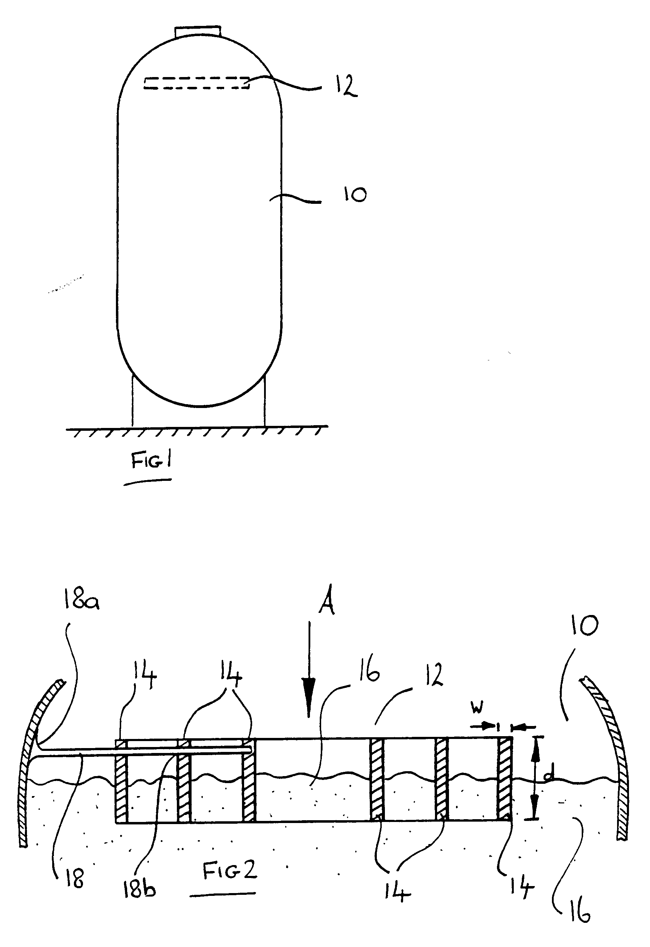

Turning now to the drawings in general, a PSA sieve vessel 10 includes a baffle 12 at an upper end thereof. The baffle 12 comprises a plurality of first wall portions 14 which, in operation, are positioned at the surface of any particulate material 16 placed within the vessel 10. The wall portions 14 are shaped and positioned so as to extend in a direction substantially into and above the particulate material 16 thereby to provide a barrier to surface movements thereof.

In a preferred arrangement, the wall portions 14 comprise a plurality of concentric right circular rings having a depth (d) greater than a thickness (w). Such an arrangement has the advantage of maximising the ability of the wall to restrict transverse movement of the sieve whilst minimising the obstructing effect during filling. It will however be appreciated that alternative ring shapes may be employed.

The wall portions 14 are linked to each other by a plurality of support members or bars 18. Each bar is connected at a first end 18a to the wall of vessel 10 and at a second end 18b to one or more of said wall portions 14.

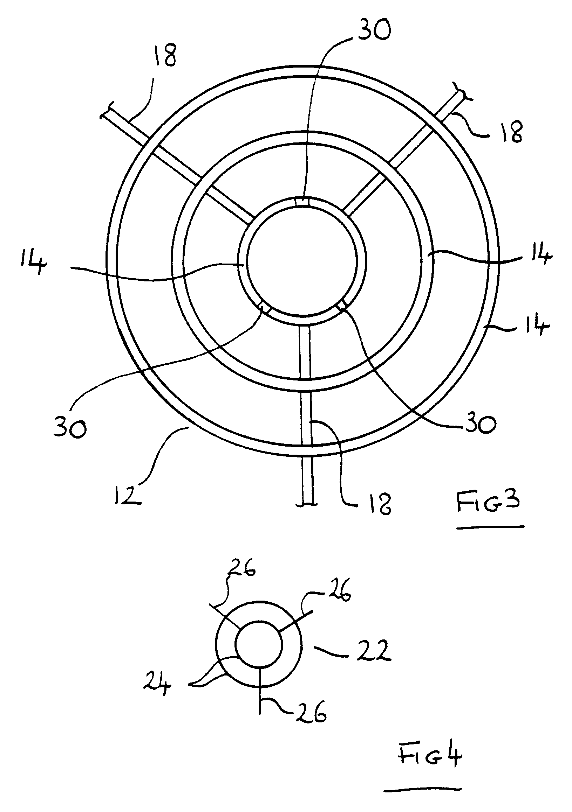

In order to improve man access for maintenance or inspection purposes, a removable wall portion 22 may be provided. In the example shown in Figure 4 the removable portion 22 comprises one or more additional second rings 24 and associated support members 26. Whilst this example is arranged for concentric mounting within the smallest first ring it will be appreciated that other arrangements, such as removable segments could be employed. Support members 26 may be positioned for location in cutouts 30 in one or more of said first rings 14 or may just rest on the top thereof.

In a practical embodiment, the baffle takes the form of a number of concentric rings 14 manufactured from mild steel, typically having a thickness of 3mm and a depth of 30cm. The rings are supported on bars which radiate from a central ring, these bars are preferably provided in odd numbers ie. 3 or 5 and the central ring has a diameter of 45cm. The concentric rings are attached to the walls of the vessel 10 near the upper tangent line so that the filling line of the vessel is about half way up the rings. In this situation the surface area of the sieve is now divided by a series of baffles which have the effect of protecting it from high radial gas velocities. The spacing of the rings is dependent on the velocities expected but in normal situations a spacing of 20cm to 25cm would be adequate. Gas entering the vessel does so via a distributor (not shown) which avoids direct impingement on the sieve. Such a distributor would normally be situated above the 45cm central ring which is sized for man access.

In operation, sieve material is poured into the vessel 10 and passes between the rings 14 and removable portion 22 which present little or no obstruction. Once filling is completed, the vessel is closed. During operation of the plant, sieve material experiences transverse and radial gas velocities which can, in some circumstances, result in sieve moving in a "sand dune" effect. This effect is significantly reduced and possibly eliminated by the wall portions of the present invention which effectively act as a physical barrier to sieve movement. Any sieve which is moved tends to pile up against one or other of the wall portions 14 and is thus prevented from moving very far.

## Claims

1. A vessel (10) for containing a bed of particulate material (16) in which a headspace is provided between the top of the bed and the upper vessel wall, the vessel (10) comprising a baffle (12) for reducing surface movement of the particulate material (16) and which is positioned at the surface of any particulate material (16) within the vessel (10), characterised in that, the baffle (12) comprises a plurality of concentric vertical first wall portions (14) which extend above and into said particulate material (16), thereby to provide a barrier to horizontal surface movement of said particulate material (16), the arrangement being such that there is substantially no obstruction to the passage of particulate material between the surface of the bed of particulate material (16) and the headspace.

2. A vessel as claimed in Claim 1 characterised in that the vertical first wall portions (14) comprise a plurality of rings, each having a depth (d) and a wall thickness (w) and in which said depth (d) is greater than said wall thickness (w).

3. A vessel as claimed in Claim 1 or Claim 2 characterised in that the vertical first wall portions (14) comprise right circular rings.

4. A vessel as claimed in any one of the preceding claims characterised by a plurality of support members (18) each connected at a first end (18a) to the vessel and at a second end (18b) to said baffle (12).

5. A vessel as claimed in any one of the preceding claims characterised in that the baffle (12) comprises a removable portion (22).

6. A vessel as claimed in Claim 5_{,} characterised in that said removable portion (22) comprises one or more second rings which, in operation, is/are removably suspended from said vertical first wall portions (14) which also have the form of rings.

7. A vessel as claimed in Claim 6 characterised in that said removable portion (22) is adapted for concentric suspension within said vertical first wall portions (14).

## Patentansprüche

1. Behälter (10) zur Aufnahme eines Betts aus Teilchenmaterial (16), wobei zwischen der Bettoberseite und der oberen Behälterwand ein Kopfraum vorgesehen ist, wobei weiter der Behälter (10) ein Dämpfungsorgan (12) zur Verringerung der Oberflächenbewegung des Teilchenmaterials (16) enthält, das an der Oberfläche eines in dem Behälter (10) befindlichen Teilchenmaterials (16) positioniert ist, dadurch gekennzeichnet, daß das Dämpfungsorgan (12) eine Mehrzahl konzentrischer vertikaler erster Wandbereiche (14) aufweist, die über und in das Teilchenmaterial (16) ragen und eine Sperre gegen eine horizontale Oberflächenbewegung des Teilchenmaterials (16) bilden, wobei die Anordnung so getroffen ist, daß im wesentlichen kein Hindernis für den Durchtritt von Teilchenmaterial zwischen der Oberfläche des Betts aus dem Teilchenmaterial (16) und dem Kopfraum vorhanden ist.

2. Behälter nach Anspruch 1, dadurch gekennzeichnet, daß die vertikalen ersten Wandbereiche (14) eine Mehrzahl von Ringen bilden, die jeweils eine Tiefe (d) und eine Wanddicke (w) haben und wobei die Tiefe (d) größer als die Wanddicke (w) ist.

3. Behälter nach Anspruch 1 oder 2, dadurch gekennzeichnet, daß die vertikalen ersten Wandbereiche (14) aufrechte Kreiszylinderringe sind.

4. Behälter nach einem der vorhergehenden Ansprüche, gekennzeichnet durch eine Mehrzahl von Tragelementen (18), die jeweils mit einem ersten Ende (18a) mit dem Behälter und mit einem zweiten Ende (18b) mit dem Dämpfungsorgan (12) verbunden sind.

5. Behälter nach einem der vorhergehenden Ansprüche, dadurch gekennzeichnet, daß das Dämpfungsorgan (12) einen abnehmbaren Teil (22) aufweist.

6. Behälter nach Anspruch 5, dadurch gekennzeichnet, daß der abnehmbare Teil (22) einen oder mehrere zweite Ringe umfaßt, der bzw. die im Betrieb abnehmbar an den vertikalen ersten Wandteilen (14), die ebenfalls die Form von Ringen haben, aufgehängt ist, bzw. sind.

7. Behälter nach Anspruch 6, dadurch gekennzeichnet, daß der abnehmbare Teil (22) für eine konzentrische Aufhängung innerhalb der vertikalen ersten Wandteile (14) ausgelegt ist.

## Revendications

1. Cuve (10) destinée à contenir un lit de matière particulaire (16), dans laquelle un espace libre est prévu entre le haut du lit et la paroi supérieure de la cuve, la cuve (10) comprenant un déflecteur (12) pour réduire le mouvement en surface de la matière particulaire (16) et qui est positionné à la surface de toute matière particulaire (16) à l'intérieur de la cuve (10), ***caractérisée en ce que*** le déflecteur (12) comprend une pluralité de premières portions de parois concentriques verticales (14) qui s'étendent au-dessus et dans ladite matière particulaire (16), constituant ainsi une barrière au mouvement horizontal en surface de ladite matière particulaire (16), la disposition étant telle qu'il n'y ait substantiellement aucun obstacle au passage de la matière particulaire entre la surface du lit de matière particulaire (16) et l'espace libre.

2. Cuve selon la Revendication 1, ***caractérisée en ce que*** les premières portions de parois verticales (14) comprennent une pluralité de couronnes ayant chacune une hauteur (d) et une épaisseur (w) de paroi, et dans lesquelles ladite hauteur (d) est supérieure à ladite épaisseur (w) de paroi.

3. Cuve selon la Revendication 1 ou la Revendication 2, ***caractérisée en ce que*** les premières portions de parois verticales (14) comprennent des couronnes circulaires droites.

4. Cuve selon l'une quelconque des Revendications précédentes, ***caractérisée par*** une pluralité d'éléments de support (18) raccordé chacun à la cuve par une première extrémité (18a) et audit déflecteur (12) par une seconde extrémité (18b).

5. Cuve selon l'une quelconque des Revendications précédentes, ***caractérisée en ce que*** le déflecteur (12) comprend une portion amovible (22).

6. Cuve selon la Revendication 5, ***caractérisée en ce que*** ladite portion amovible (22) comprend une ou plusieurs secondes couronnes qui, en service, est/sont suspendue(s) de manière amovible aux dites premières portions de parois verticales (14) qui ont aussi la forme de couronnes.

7. Cuve selon la Revendication 6, ***caractérisée en ce que*** ladite portion amovible (22) est adaptée pour une suspension concentrique dans lesdites premières portions de parois verticales (14).
